# EUROPÄISCHE PATENTSCHRIFT

(11) **EP 0 671 309 B1**
(45) Veröffentlichungstag und Bekanntmachung des Hinweises auf die Patenterteilung: **12.05.1999**
(21) Anmeldenummer: 94120645.0
(22) Anmeldetag: 24.12.1994
(51) Int. Cl.: B62D 1/26, B62D 7/14, B60F 1/00

(54) **Nicht spurgebundenes Fahrzeug, insbesondere Omnibus**
Non-trackbound vehicle, especially a bus
Véhicule non relié aux rails, notamment un autobus

(30) Priorität: 08.03.1994 DE 4407726
(43) Veröffentlichungstag der Anmeldung: 13.09.1995
(73) Patentinhaber: DaimlerChrysler AG, 70567 Stuttgart (DE)
(72) Erfinder: Frey, Gerhard, Dipl.-Ing., D-73733 Esslingen (DE); Bayha, Wulf, Dipl.-Ing. (FH), D-70327 Stuttgart (DE); Mauz, Uwe, Dipl.-Ing. (FH), D-73730 Esslingen (DE); Hirth, Thomas, Dipl.-Ing., D-70597 Stuttgart (DE)

(56) Entgegenhaltungen:
- FR-A- 2 163 137
- GB-A- 2 134 461

## Beschreibung

Die Erfindung betrifft ein nicht spurgebundenes Fahrzeug, insbesondere Omnibus, mit willkürlich lenkbaren Vorderrädern sowie einer Hinterradlenkung mit selbsttätiger, automatisch arbeitender, rechnergestützter Steuerung, die insbesondere in Abhängigkeit von den Lenkwinkeln der Vorderräder arbeitet.

Derartige Fahrzeuge sind grundsätzlich bekannt, beispielsweise aus der DE 41 40 124 C1, welche im Zusammenhang mit solchen Fahrzeugen steht, die hinter der Hinterachse einen relativ langen Überhang besitzen. Gelangen derartige Fahrzeuge in eine Position dicht neben einer parallel zur Fahrzeuglängsrichtung erstreckten feststehenden Wand, so wird es für den Fahrer schwierig, das Fahrzeug bei der Weiterfahrt von der Wand zu entfernen. Denn die Vorderräder dürfen dann nur sehr wenig aus ihrer Geradeausstellung in die von der Wand wegweisenden Richtung ausgelenkt werden, weil andernfalls das Heck übermäßig in Richtung der Wand ausschwenken und mit der Wand kollidieren würde. Nach der DE 41 40 124 C1 ist in diesem Zusammenhang vorgesehen, bei derartigen Fahrzeugen eine Hinterradzusatzlenkung derart zu steuern, daß bei Kurvenfahrt ein Punkt am Fahrzeugheck der Bahnkurve eines analogen Punktes am Fahrzeugbug erfolgt. Im Ergebnis läuft dies darauf hinaus, daß die Hinterräder bei Verlassen einer wandnahen Position des Fahrzeuges zunächst gleichsinnig zu den Vorderrädern, deren Lenkung durch den Fahrer betätigt wird, ausgelenkt werden. Damit kann der Fahrer die Vorderräder praktisch beliebig in eine von der Wand wegweisende Richtung steuern. Aus der DE 39 29 994 A1 ist es bekannt, bei Fahrzeugen mit sehr langem Radstand eine Hinterradzusatzlenkung derart arbeiten zu lassen, daß sich der Fahrzeugaufbau relativ zum Untergrund bei Kurvenfahrt so bewegt, als hätte das Fahrzeug einen kurzen Radstand und unlenkbare Hinterräder. Gleichwohl hat das Fahrzeug bei Geradeausfahrt aufgrund seines langen Radstandes eine außerordentlich hohe Richtungsstabilität.

Zwar bringt eine Hinterradzusatzlenkung einen erheblichen herstellungsmäßigen Aufwand mit sich. Jedoch bietet die Hinterradzusatzlenkung andererseits auch die Möglichkeit, herstellungsmäßig vergleichbar preiswerte und flexible Fahrzeugkonzepte zu verwirklichen.

So wurde bereits für Omnibusse mit sehr langem Radstand und Hinterradzusatzlenkung in einer nicht vorveröffentlichten Anmeldung (Daim 23 005/4) vorgeschlagen, einen modularen Aufbau vorzusehen, wobei ein die lenkbaren Vorderräder umfassender Frontmodul und ein die lenkbaren Hinterräder sowie vorzugsweise auch deren Antrieb umfassender Heckmodul mit einem diese Module stabil verbindenden Nutzlastmodul, insbesondere in Form einer Fahrgastzelle, kombiniert sind, derart, daß nur sehr geringe Front- bzw. Hecküberhänge vor den Vorderrädern bzw. hinter den Hinterrädern vorhanden sind. Diese Bauweise bietet neben ihrer Preiswürdigkeit den Vorzug, daß ein durchgehender ebener Boden in der Fahrgastzelle mit niedrigem Abstand von der Fahrbahn angeordnet werden kann.

Aus der DE 40 12 699 A1 ist ein Lenksystem für ein mehrteiliges Straßenfahrzeug bekannt, welches aus einem zweiachsigen Vorderwagen und mindestens einem einachsigen Nachläuferwagen besteht, welcher auf dem jeweils vorausfahrenden Wagen aufgesattelt ist und lenkbare Räder besitzt. Um ein solches Fahrzeug in beiden Fahrtrichtungen ohne besondere Spurführungseinrichtungen lenkstabil zu betreiben, wird der Lenkwinkel der Räder jedes Nachläuferwagens von wenigstens einem der beiden Knickwinkel zwischen diesem Nachläuferwagen und benachbarten Wagen mit Hilfe von mechanischen und/oder hydraulischen Übertragungsmitteln beeinflußt. Bei Vorwärtsfahrt wird die Lenkübersetzung zwischen dem Knickwinkel und dem Lenkwinkel der Räder des Nachläuferwagens so gewählt, daß sich die vertikalen Mittelquerebenen aller Wagen im Spurkreismittelpunkt schneiden. Bei Rückwartsfahrt wird die Lenkübersetzung geändert, wobei der Lenkwinkel bei einer mechanischen Änderung der Lenkwinkelübersetzung relativ zum Knickwinkel größer wird, während der Lenkwinkel der Räder des Nachläuferwagens bei einer elektronisch beeinflußbaren Änderung der Lenkübersetzung im Sinne einer kontinuierlichen Spurführung dem Knickwinkel regelbar angepaßt wird. Auf diese Weise besteht die Möglichkeit, den Fahrzeugzug auch dann bei Rückwärtsfahrt in eine gestreckte Stellung zu bringen, wenn zuvor drei aufeinander folgende Wagen aufgrund irregulärer Vorgänge eine Z-förmige Konfiguration relativ zueinander eingenommen haben.

Des weiteren sind insbesondere für Omnibusse Spurführungssysteme bekannt, mit denen ein spurgebundener Fahrbetrieb ermöglicht wird. Die Spurführungssysteme können in verschiedener Weise arbeiten.

Bei einer sogenannten mechanischen Spurregelung sind an den lenkbaren Vorderrädern bzw. an dem zugehörigen Lenkgestänge Arme od.dgl. mit Führungsrollen angeordnet, die mit Führungsbahnen an der Fahrbahn zusammenwirken und die Lenkung der Vorderräder betätigen.

Die Hinterräder können in herkömmlicher Weise unlenkbar angeordnet sein, wobei im Bereich der Hinterräder sogenannte Drängelrollen angeordnet sein können, die mit stationären Führungsbahnen am Fahrweg zusammenwirken und das Fahrzeugheck quer zur Laufrichtung der unlenkbaren Hinterräder verschieben. Um den Reifenverschleiß und den Verschleiß an den Drängelrollen gering zu halten, werden die Kurvenradien der Fahrbahnen mit Spurführungssystemen für derartige Drängelrollen regelmäßig sehr groß bemessen.

Prinzipiell kann auf die Zwangsführung des Fahrzeughecks mittels der Drängelrollen auch verzichtet werden. Jedoch muß dann im Bereich von Kurven ein sehr breiter Fahrstreifen zur Verfügung stehen.

Grundsätzlich sind auch elektronische Spurführungssysteme bekannt und möglich, bei denen in der Fahrbahn ein Leitkabel angeordnet ist, über das elektromagnetische Signale ausgestrahlt werden, die mittels einer fahrzeugseitigen Antenne zur Lenkung von Fahrzeugrädern ausgenutzt werden können, d.h. das Fahrzeug folgt dem Leitkabel. Derartige Spurführungssysteme werden beispielsweise für Fahrzeuge des Materialtransports in Fabriken eingesetzt.

Aus der FR-A 21 63 137 ist es im Zusammenhang mit einer mechanischen Spurregelung bei Omnibussen bekannt, lenkbare Vorder- und Hinterräder vorzusehen, wobei eine mechanische Zwangskopplung der Vorder- und Hinterradlenkungen vorgesehen ist, derart, daß Vorder- und Hinterräder jeweils gegenläufig mit einander entsprechenden Lenkwinkeln ausgelenkt werden. Dies ist gleichbedeutend damit, daß das Fahrzeugheck gegenüber dem Fahrzeugvorderteil bei Einfahrt in eine Kurve zur Kurvenaußenseite hin ausschwenkt, d.h. die gelenkten Hinterräder durchlaufen bei der Einfahrt in eine Kurve Spuren, die bezüglich des Kurvenzentrums radial außerhalb der von den Vorderrädern durchlaufenen Spuren liegen. Nur bei sogenannter stationärer Kreisfahrt, d.h. wenn die Lenkwinkel der Räder über längere Zeit unverändert bleiben, durchlaufen die Vorder- und Hinterräder weitestgehend die gleichen Spuren.

Nach der FR-A 21 63 137 ist des weiteren vorgesehen, sowohl am Lenkgestänge der Vorderräder als auch am Lenkgestänge der Hinterräder Führungsarme mit Führungsrollen anzuordnen, die mit Führungsbahnen neben der Fahrbahn zusammenwirken. Dabei wird die mechanische Antriebskopplung zwischen den Führungsarmen der jeweils in Fahrtrichtung hinteren Achse und dem Lenkgestänge dieser Achse aufgetrennt. Damit wird erreicht, daß unabhängig von der Fahrtrichtung des Omnibusses nur die jeweils vorderen Führungsarme lenkwirksam werden.

Aus der GB 2 134 461 A ist ein Räderaggregat für einen Kameraschlitten bekannt. Dieses Räderaggregat besitzt einerseits Räder für Schienenfahrt und andererseits Räder für normale, nicht spurgeführte Bodenfahrt. Dabei besitzt der Kameraschlitten mehrere, in der Regel vier Räderaggregate, welche bei nicht spurgeführter Bodenfahrt zur fahrerseitigen Steuerung lenkungsmäßig miteinander zwangsgekoppelt und bei Schienenfahrt lenkungsmäßig von einander entkoppelt sind.

Aufgabe der Erfindung ist es nun, ein sowohl für nicht spurgeführten Betrieb als auch für Spurführungssysteme besonders geeignetes Fahrzeug zu schaffen.

Diese Aufgabe wird erfindungsgemäß dadurch gelöst, daß bei einem Fahrzeug der eingangs angegebenen Art die Vorderräder für einen spurgeführten Betrieb mit die Vorderradlenkung betätigenden Spurführungselementen ausgerüstet sind und die rechnergestützte Steuerung bei spurgeführtem Betrieb auf eine Betriebsweise umschaltbar ist bzw.umschaltet, bei der die Hinterräder zumindest annähernd auf den gleichen Spuren bzw. den gleichen Fahrstreifen wie die Vorderräder bleiben.

Die Erfindung beruht auf dem allgemeinen Gedanken, die für normale Straßenfahrt bei nicht spurgebundenem Fahrbetrieb vorteilhafte Hinterradzusatzlenkung zusätzlich auch für spurgebundenen Fahrbetrieb einzusetzen. Dies ist ohne größeren Aufwand möglich, da für selbsttätig automatisch arbeitende Hinterradzusatzlenkungen ohnehin eine rechnerunterstützte Steuerung vorgesehen ist. Im wesentlichen braucht die Kapazität des Rechners nur groß genug zu sein, um auch die notwendigen Lenkmanöver für den spurgebundenen Fahrbetrieb auszuführen. Dazu muß der Rechner eingangsseitig mit Sensoren für den Lenkwinkel der Vorderräder sowie den von den Vorderrädern zurückgelegten Weg ausgerüstet sein, um die für die Hinterräder notwendigen Lenkmanöver ermitteln zu können. Dies stellt jedoch keine größere Schwierigkeit dar, da grundsätzlich für derartige Hinterradzusatzlenkungen unterschiedliche Lenkweisen bekannt sind.

Bei der Erfindung wird praktisch jeglicher Verschleiß an den Reifen der Hinterräder sowie an den Drängelrollen vermieden. Soweit gemäß einer bevorzugten Ausführungsform Drängelrollen vorhanden sind, haben diese lediglich Sicherungsfunktion gegenüber äußeren Einflüssen, wie z.B. Fahrbahnglätte oder starker Seitenwind.

Theoretisch können die lenkbaren Hinterräder auch in grundsätzlich gleicher Weise wie die Vorderräder beim spurgebundenen Fahrbetrieb mechanisch über Spurführungselemente gelenkt werden. Dies wäre jedoch ein relativ hoher konstruktiver Aufwand, wobei nachteilig hinzukommt, daß entsprechende Lenksysteme für nicht spurgebundene Fahrt im Falle der Hinterräder jedenfalls dann stillgesetzt werden müßten, wenn zwischen dem Lenkgetriebe der Vorderräder und der Lenkung der Hinterräder keine Kopplung vorhanden ist.

Gemäß einer bevorzugten Ausführungsform der Erfindung kann innerhalb oder außerhalb des Fahrzeuges ein Sensor od.dgl. angeordnet sein, welcher beim Wechsel zwischen Fahrbahnen für nicht spurgebundenen Betrieb und Fahrbahnen für spurgebundenen Betrieb anspricht und die Hinterradlenkung zwischen einer Betriebsweise für normale Straßenfahrt und einer Betriebsweise für spurgebundenen Betrieb automatisch umschaltet. Dieser Sensor kann in grundsätzlich beliebiger Weise mit Signalgebern an den Fahrbahnen zusammenwirken, beispielsweise mechanisch, optisch oder elektromagnetisch bzw. induktiv.

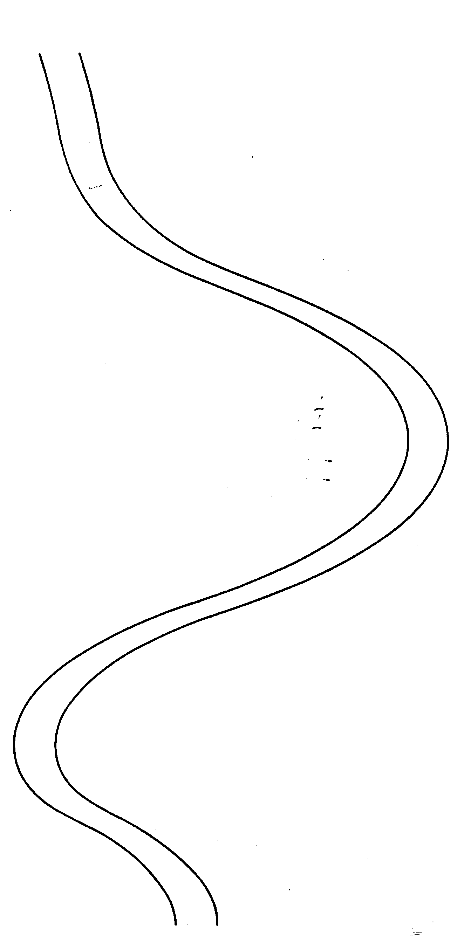

Nachfolgend wird die Erfindung noch anhand der Zeichnung verdeutlicht.

Dabei zeigt die einzige Figur eine Draufsicht auf den vom Fahrzeug bei spurgebundenem Betrieb benötigten Fahrweg.

Man erkennt, daß Vorder- und Hinterräder des Fahrzeuges weitestgehend auf gleichen Bahnen laufen, da das Fahrzeug auch in engeren Kurven nur ein schmales Fahrbahnband benötigt.

## Patentansprüche

1. Nicht spurgebundenes Fahrzeug, insbesondere Omnibus, mit willkürlich lenkbaren Vorderrädern sowie einer Hinterradlenkung mit selbsttätiger, automatisch arbeitender, rechnergestützter Steuerung, welche in Abhängigkeit vom Lenkwinkel der Vorderräder arbeitet,
**dadurch gekennzeichnet,**
daß die Vorderräder für einen spurgeführten Betrieb mit die Vorderradlenkung betätigenden Spurführungselementen ausgerüstet sind und die rechnergestützte Steuerung bei spurgeführtem Betrieb auf eine Betriebsweise umschaltbar ist bzw. umschaltet, bei der die Hinterräder zumindest annähernd auf den gleichen Spuren bzw. den gleichen Fahrstreifen wie die Vorderräder bleiben.

2. Fahrzeug nach Anspruch 1,
**dadurch gekennzeichnet,**
daß im Heckbereich an den Hinterrädern - als normal nicht benötigte Sicherungsvorrichtung - zusätzliche Zwangsführungselemente angeordnet sind, die mit stationären Gegenführungsbahnen an Strecken für spurgebundenen Fahrbetrieb zusammenarbeiten und das Fahrzeugheck quer zur Laufrichtung der Hinterräder zu verschieben vermögen.

3. Fahrzeug nach Anspruch 1 oder 2,
**dadurch gekennzeichnet,**
daß am Fahrzeug mindestens ein Sensor od.dgl. angeordnet ist, der mit Signalgebern am Fahrweg zusammenwirkt und bei Wechsel von Fahrstrecken für spurgebundenen Fahrbetrieb und Fahrstrecken für nicht spurgebundenen Fahrbetrieb die Hinterradlenkung zwischen einer Betriebsweise für spurgebundenen und einer Betriebsweise für nicht spurgebundenen Fahrbetrieb umschaltet.

## Claims

1. A vehicle, particularly a bus, which is not track-bound and which has arbitrarily steerable front wheels and rear wheel steering with independent and automatically operating computer-supported control which works as a function of the steering angle of the front wheels, characterised in that the front wheels for a track-guided operation are equipped with track-guiding elements which actuate the front wheel steering and in that the computer-supported control can, during track-guided operation, be switched over or switches to an operating mode in which the rear wheels remain at least approximately on the same tracks or on the same strips of carriageway as the front wheels.

2. A vehicle according to claim 1, characterised in that in the rear part, on the rear wheels - as a safety device which is not normally required - there are additional positive guiding elements which co-operate with stationary matching guide tracks on sections for track-bound operation and which are capable of displacing the rear of the vehicle crosswise to the direction of movement of the rear wheels.

3. A vehicle according to claim 1 or 2, characterised in that there is on the vehicle at least one sensor of the like which -operates with signal transmitters on the carriageway and which, upon a change of travelling sections for track-bound operation and sections for travelling which are not track-bound, the rear wheel steering can be switched over between an operating mode for track-bound and a mode for non-track-bound operation.

## Revendications

1. Véhicule non lié à une voie, en particulier autobus, comprenant des roues avant pouvant être braquées à volonté, ainsi qu'une direction des roues arrière à commande autonome, fonctionnant automatiquement, assistée par ordinateur, qui opère en fonction de l'angle de braquage des roues avant,
caractérisé
en ce que, pour une marche guidée par une voie, les roues avant sont équipées d'éléments de guidage par la voie actionnant la direction des roues avant et la commande assistée par ordinateur peut être convertie ou est convertie pour la marche guidée par la voie en un mode de fonctionnement suivant lequel les roues arrière restent au moins approximativement sur les mêmes voies ou les mêmes bandes de circulation que les roues avant.

2. Véhicule selon la revendication 1,
caractérisé
en ce que dans la zone arrière, au niveau des roues arrière, sont disposés des éléments auxiliaires de guidage forcé, formant un dispositif de sécurité qui n'est normalement pas nécessaire - qui coopèrent avec des contre-voies fixes de guidage sur les trajets destinés à une marche liée à une voie et sont capables de déplacer l'arrière du véhicule perpendiculairement à la direction de roulement des roues arrière.

3. Véhicule selon la revendication 1 ou 2,
caractérisé
en ce que sur le véhicule est disposé au moins un détecteur ou analogue qui coopère avec des émetteurs de signaux disposés sur le trajet et convertit la direction des roues arrière entre un mode de fonctionnement pour une marche liée à une voie et un mode de fonctionnement pour une marche non liée à une voie lors d'un passage de trajets pour marche guidée par rails à des trajets pour marche non liée à une voie.
